# EUROPEAN PATENT SPECIFICATION

(11) **EP 3 584 917 B1**
(45) Date of publication and mention of the grant of the patent: **26.01.2022**
(21) Application number: 18771684.0
(22) Date of filing: 21.03.2018
(51) Int. Cl.: H02M 1/36, H02M 1/32, H02M 1/00

(54) **TWO-STAGE SWITCH POWER SUPPLY**
ZWEISTUFIGES SCHALTNETZTEIL
ALIMENTATION DE COMMUTATION À DEUX ÉTAGES

(30) Priority: 21.03.2017 CN 201710169436
(43) Date of publication of application: 25.12.2019
(73) Proprietor: Tridonic GmbH & Co. KG, 6851 Dornbirn (AT)
(72) Inventor: MAO, Qiuxiang, Shenzhen Guangdong 518000 (CN); CHEN, Zhiwen, Shenzhen Guangdong 518000 (CN); TANG, Jiangxin, Shenzhen Guangdong 518000 (CN); ZHONG, Guoji, Shenzhen Guangdong 518000 (CN)
(74) Representative: Rupp, Christian
(86) International application number: PCT/CN2018/079740
(87) International publication number: WO 2018/171613

(56) References cited:
- WO-A1-2016/037855
- CN-A- 1 596 503
- CN-U- 204 424 869
- CN-U- 205 160 363
- US-A1- 2005 088 862
- US-A1- 2008 111 594
- US-A1- 2013 286 690
- US-B1- 6 246 596
- Neon Infi: "Power Management and Multimarket Application Note AN-EVAL-I LD6070", , 22 July 2014 (2014-07-22), XP055817417, Retrieved from the Internet: URL:https://www.infineon.com/dgdl/Infineon --AN-v02_01-en.pdf?fileId=db3a30433e0d3017 013e0d96ce82014f [retrieved on 2021-06-23]

## Description

### Technical Field

The present invention relates to a technical field of switch power supply, and in particular, to a two stage switch power supply.

### Background Art

The two-stage switch power supply in prior art includes a first control module, a second control module, a first conversion module, and a second conversion module, wherein the first control module and the second control module respectively control the first conversion module and the second conversion module. The first conversion module outputs a voltage to the second conversion module. When the second conversion module outputs to bring in a load, the output voltage of the first conversion module is rapidly decreased, causing the entire switch power supply to be in an intermittent working state. However, increasing the output voltage of the first conversion module will increase the consumption of the switch power supply. In summary, there has been a problem in prior art that increasing the output voltage of the first conversion module in order to prevent the switch power supply from being in an intermittent working state causes an increase in the consumption of the switch power supply.

US 6,246,596 B1 discloses a two-stage switch power supply according to the preamble of independent claim 1.

The Application Note AN-EVAL-ILD6070 from Infineon Technologies with the title "High Power LEDs with 60V LED Driver IC ILD6070" describes a hysteretic buck LED driver IC for driving high power LEDs in general lighting applications with average currents up to 0.7 A. The driver IC operates in a wide input voltage range from 4.5 V to 60 V with soft starting capability and the possibility for either analog or PWM dimming. Soft start of the LED light can be achieved by adding a capacitor at a PWM pin of the driver IC.

### Summary of the Invention

### Technical Problem

The object of the present invention is to provide a two-stage switch power supply capable of solving the problem existing in prior art, that is, increasing the output voltage of the first conversion module in order to prevent the switch power supply from being in an intermittent working state causes an increase in the consumption of the switch power supply.

### Solution to Problem

### Technical Solution

The present invention is implemented as follows. A first aspect of the present invention provides a two-stage switch power supply which includes an input rectification module, a first control module, a first conversion module, a second control module, a second conversion module, and a voltage limiting switch module;
an output end of the input rectification module is connected to a voltage input end of the first control module and a voltage input end of the first conversion module, a signal output end of the first control module is connected to a control end of the first conversion module, a voltage output end of the first conversion module is connected to a first voltage input end of the second conversion module, a first voltage input end of the voltage limiting switch module, and a voltage input end of the second control module, a second voltage input end of the voltage limiting switch module is connected to a control end of the second control module, an output end of the second control module is connected to a second voltage input end of the second conversion module;
the input rectification module is configured to perform rectification and filtering on an input voltage and then outputs a rectification filtering voltage signal to the first control module and the first conversion module;
the first control module is configured to start according to the rectification filtering voltage signal, and controls the first conversion module to perform voltage conversion on the rectification filtering voltage signal so as to acquire a power supply voltage and a bus voltage;
the first conversion module is configured to output the power supply voltage to the first control module and to output the bus voltage to the second conversion module, the voltage limiting switch module, and the second control module;
the voltage limiting switch module is configured to control, when the bus voltage reaches a preset voltage, the second control module to output a voltage signal to the second conversion module so as to control the second conversion module to convert the bus voltage and then output the voltage to a load;
the second conversion module includes a resistor R65, a diode D62, a power inductor L61 and a capacitor C62;
a first end of the resistor R65 is connected to a cathode of the diode D62 and constitutes a first voltage input end of the second conversion module;
a second end of the resistor R65 is connected to a first end of the capacitor C62 and constitutes a first voltage output end of the second conversion module;
an anode of the diode D62 is connected to a first end of the power inductor L61;
a second end of the power inductor L61 is connected to a second end of the capacitor C62 and constitutes a second voltage output end of the second conversion module;
the second control module comprises a control chip IC, that further includes a soft start PWM pin, a Vsense pin connected to the first voltage output end of the second conversion module, and a V switch pin connected to the second voltage output end of the second conversion module;
wherein the voltage limiting switch module is configured to operate as a voltage limiting delay module comprising a triode Q71 and a capacitor C70, both connected in parallel across the soft start PWM pin and ground, and being configured to rapidly discharge the capacitor C70 through the triode Q71, thus achieving a rapid reset of the soft start PWM pin, so that a soft start function is provided in a next start process.

### Advantageous Effects of the Invention

### Advantageous Effects

The present invention provides a two-stage switch power supply which, by providing a voltage limiting delay start module to perform a delay control on the start of a second-stage control module during the starting process, avoids the problem that the switch power supply is in an intermittent working state due to a low voltage output by the first conversion module, and achieves a rapid start with high efficiency and low loss. Moreover, the structure is simple, and the overall cost is low.

### Brief Descriptions of the Attached Drawings

### Descriptions of the Attached Drawings

In order to more clearly illustrate the technical solutions in the embodiments of the present invention, attached drawings that are necessary for the illustration of the embodiments or prior art will be briefly described below. It is obvious that the attached drawings in the following descriptions are merely some of the embodiments of the present invention, and those of ordinary skill in the art can obtain other drawings based on these attached drawings without any creative work.
Fig. 1 is a schematic structural diagram of a two-stage switch power supply according to an embodiment of the present invention;
Fig. 2 is a schematic structural diagram of a voltage limiting switch module in a two-stage switch power supply according to an embodiment of the present invention;
Fig. 3 is a schematic structural diagram of a first control module in a two-stage switch power supply according to an embodiment of the present invention;
Fig. 4 is a circuit diagram of a two-stage switch power supply according to another embodiment of the present invention.

### Descriptions of Embodiments

### Embodiments of the Invention

The present invention will be further described in detail below with reference to the attached drawings and embodiments in order to make the objects, technical solutions, and advantages of the present invention clearer. It is to be understood that the specific embodiments described herein are merely illustrative of the present invention and are not intended to limit the present invention.

The following specific embodiments will be described to explain the technical solutions of the present invention.

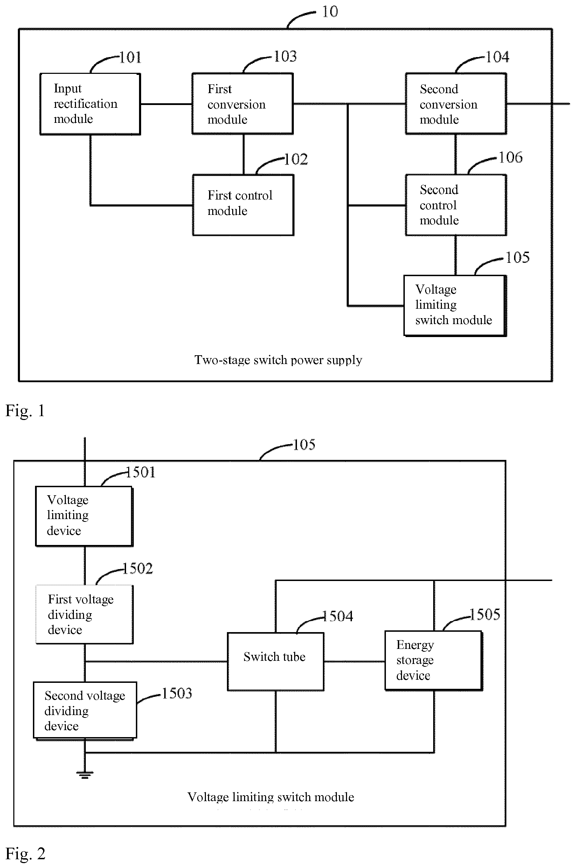

An embodiment of the present invention provides a two-stage switch power supply 10. As shown in Fig. 1, the two-stage switch power supply 10 includes an input rectification module 101, a first control module 102, a first conversion module 103, a second control module 106, a second conversion module 104, and a voltage limiting switch module 105;
an output end of the input rectification module 101 is connected to a voltage input end of the first control module 102 and a voltage input end of the first conversion module 103, a signal output end of the first control module 102 is connected to a control end of the first conversion module 103, a voltage output end of the first conversion module 103 is connected to a voltage input end of the second conversion module 104, a first voltage input end of the voltage limiting switch module 105, and a voltage input end of the second control module 106, a second voltage input end of the voltage limiting switch module 105 is connected to a control end of the second control module 106, an output end of the second control module 106 is connected to a second voltage input end and a third voltage input end of the second conversion module 104;
the input rectification module 101 performs rectification and filtering on an input voltage and then outputs a rectification filtering voltage signal to the first control module 102 and the first conversion module 103;
the first control module 102 starts according to the rectification filtering voltage signal, and controls the first conversion module 103 to perform voltage conversion on the rectification filtering voltage signal so as to acquire a power supply voltage and a bus voltage;
the first conversion module 103 outputs the power supply voltage to the first control module 102 and outputs the bus voltage to the second conversion module 104, the voltage limiting switch module 105, and the second control module 106;
the voltage limiting switch module 105 controls, when the bus voltage reaches a preset voltage, the second control module 106 to output a voltage signal to the second conversion module 104 so as to control the second conversion module 104 to convert the bus voltage and then output the voltage to a load.

In the present embodiment of the present invention, the input rectification module 101 is configured to perform rectification and filtering on an input alternating current and then to supply power to the first control module 102 and the first conversion module 103. The first control module 102 starts and controls the first conversion module 103 to work. The first conversion module 103 outputs a voltage to supply power to the first control module 102 on the one hand, and to supply power to the second conversion module 104, the voltage limiting switch module 105, and the second control module 106 on the other hand. In this case, after receiving the voltage output by the first conversion module 103, the voltage limiting switch module 105 does not immediately control the second control module 106 to work until the voltage output by the first conversion module 103 reaches a preset voltage, and then the second control module 106 controls the second conversion module 104 to start working. Although the output end of the second conversion module 104 is connected to the load, since the output voltage of the first conversion module 103 is high, it does not cause too much power supplied to the load to make the first control module 102 be in an intermittent working state. Here, the voltage limiting switch module 105 is a delay module consisting of discrete components.

Further, the voltage limiting switch module 105 is in an on state connected to the ground when the bus voltage has not reached the preset voltage, and the control end of the second control module 106 is connected to the ground;
the voltage limiting switch module 105 is disconnected from the ground when the bus voltage reaches the preset voltage, and the second control module 106 charges the voltage limiting switch module 105 through its control end so as to make the second control module 106 reach a working state.

Specifically, the second control module 106 may be a control chip. The working principle of the control chip is that a voltage is output to the voltage limiting switch module 105 through a soft start function pin, and when the voltage value stored on the voltage limiting switch module 105 reaches a preset value, the control chip is made to work. In order to prevent the control chip from working when the output voltage of the first conversion module 103 is small, it is in an on state connected to the ground when the bus voltage has not reached the preset voltage, and the soft start function pin of the control chip is connected to the ground. At this time, the voltage value stored on the voltage limiting switch module 105 is 0, and the control chip does not work. When the bus voltage reaches the preset voltage, it is disconnected from the ground, and the control chip charges the voltage limiting switch module 105 through the soft start function pin so as to make the second control module 106 reach a working state.

As an embodiment, as shown in Fig. 2, the voltage limiting switch module 105 includes a voltage limiting device 501, a first voltage dividing device 1502, a second voltage dividing device 1503, a switch tube 1504, and an energy storage device 1505, wherein a first end of the voltage limiting device 1501 is the voltage input end of the voltage limiting switch module 105, a second end of the voltage limiting device 1501 is connected to a first end of the first voltage dividing device 1502, a second end of the first voltage dividing device 1502 is connected to a control end of the switch tube 1504 and a first end of the second voltage dividing device 1503, an input end of the switch tube 1504 is connected to the control end of the second control module 106 and a first end of the energy storage device 1505, an output end of the switch tube 1504, a second end of the second voltage dividing device 1503, and a second end of the energy storage device 1505 are connected to the ground together;
the voltage limiting device 1501 is in an off state when the bus voltage has not reached the preset voltage, and the switch tube 1504 is in an on state to connect the control end of the second control module 106 to the ground;
the voltage limiting device 1504 is in an on state when the bus voltage reaches the preset voltage, and the switch tube 1504 is in an off state so that the second control module 106 charges the energy storage device 1505 through its control end so as to make the second control module 106 reach a working state.

Here, the voltage limiting device 1504 may be a voltage stabilizing tube, and a cathode and an anode of the voltage stabilizing tube are the first end and the second end of the voltage limiting device. The voltage limiting device 1504 may also be a chip with a voltage limiting function, and it is not limited herein.

Here, as an embodiment, the switch tube 1504 is a PNP type triode, and a collector, an emitter, and a base of the PNP type triode are respectively the output end, the input end, and the control end of the switch tube.

Here, as another embodiment, the switch tube 1504 is a P type MOS transistor, and a drain, a source, and a gate of the P type MOS transistor are respectively the output end, the input end, and the control end of the switch tube.

Further, when the input voltage is powered off, the first conversion module 103 stops working, the voltage limiting device 1501 is in an off state, and the switch tube 1504 is in an on state to discharge the energy storage device to the ground. A rapid reset of the soft start function pin of the control chip is achieved by discharging the energy storage device to the ground, so that the soft start function pin has a soft start function in the next start process.

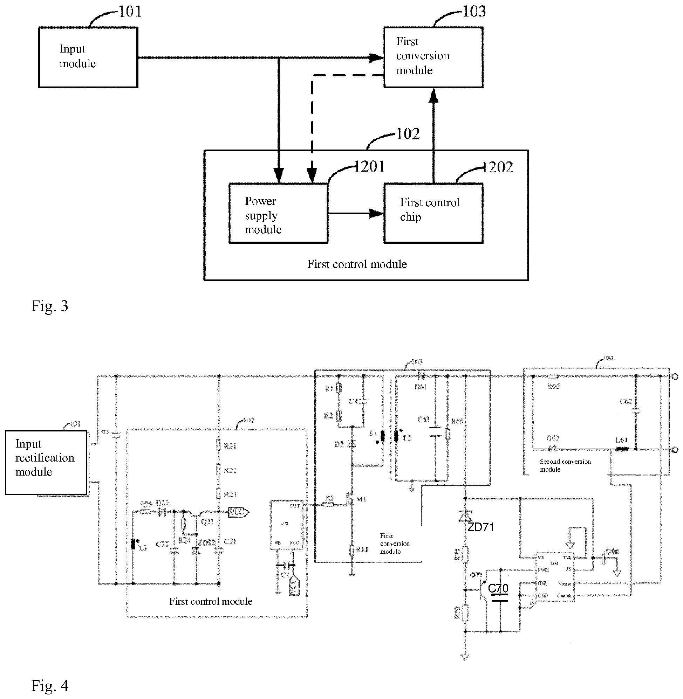

For the first control module 102, as an embodiment, as shown in Fig. 3, the first control module 102 includes a power supply module 1201 and a first control chip 1202, a voltage input end of the power supply module 1201 is a voltage input end of the first control module 102, a voltage output end of the power supply module 1201 is connected to the voltage input end of the first control chip 1202, and a voltage output end of the first control chip 1202 is a voltage output end of the first control module 102;
the power supply module 1201 starts the first control chip 1202 according to the rectification filtering voltage signal;
the first control chip 1202 controls the first conversion module 103 to perform voltage conversion on the rectification filtering voltage signal so as to supply power to the power supply module;
the power supply module 1201 outputs a power supply voltage to the first control chip 1202.

Specifically, after the power supply module 1201 is started according to the output voltage of the input rectification module 101, the first control module 102 is continuously powered according to the voltage output by the first conversion module 103, and a power supply can be achieved between the first conversion module 103 and the power supply module through an energy conversion device.

The embodiment of the present invention will be described in detail below through a specific circuit structure. As shown in Fig. 4:
For the first conversion module 103, specifically, the first conversion module 103 includes a resistor R1, a resistor R2, a resistor R5, a resistor R11, a resistor R69, a capacitor C4, a capacitor C63, a diode D2, a diode D61, a field effect transistor M1, and a transformer;
a first end of the resistor R1 is connected to a first end of the resistor C4 and a different terminal of a primary winding L1 of the transformer and constitutes the voltage input end of the first conversion module 103, a second end of the resistor R1 is connected to a first end of the resistor R2, a second end of the resistor R2 is connected to a second end of the capacitor C4 and a cathode of the diode D2, an anode of the diode D2 is connected to a dotted terminal of the primary winding L1 of the transformer and a drain of the field effect transistor M1, a gate of the field effect transistor M1 is connected to a first end of the resistor R5, a second end of the resistor R5 is the control end of the first conversion module 103, a source of the field effect transistor M1 is connected to a first end of the resistor R11, a second end of the resistor R11 is connected to the ground, a dotted terminal of a first secondary winding L2 of the transformer is connected to an anode of the diode D61, a cathode of the diode D61 is connected to a first end of the capacitor C63 and a first end of the resistor R69, a different terminal of the first secondary winding L2 of the transformer, a second end of the capacitor C63, and a second end of the resistor R69 are connected to the ground together.
For the power supply module, specifically, the power supply module includes a resistor R21, a resistor R22, a resistor R23, a resistor R24, a resistor R25, a capacitor C21, a capacitor C22, a triode Q21, a voltage stabilizing tube ZD22 and a diode D22;
a first end of the resistor R21 is the voltage input end of the power supply module, a second end of the resistor R21 is connected to a first end of the resistor R22, a second end of the resistor R22 is connected to a first end of the resistor R23, a second end of the resistor R23 is connected to an emitter of the triode Q21 and a first end of the capacitor C21 and constitutes the voltage output end of the power supply module, a base of the triode Q21 is connected to a first end of the resistor R24 and a cathode of the voltage stabilizing tube ZD22, a second end of the resistor R24 is connected to a collector of the triode Q21, a first end of the capacitor C22, and a cathode of the diode D22, an anode of the diode D22 is connected to a first end of the resistor R25, a second end of the resistor R25 is connected to a dotted terminal of a second secondary winding L3 of the transformer, a different terminal of the second secondary winding L3 of the transformer, a second end of the capacitor C22, an anode of the voltage stabilizing tube ZD22, and a second end of the capacitor C21 are connected to the ground together.

For a voltage limiting delay module, specifically, the voltage limiting delay module includes a voltage stabilizing tube ZD71, a resistor R71, a resistor R72, a triode Q71, and a capacitor C70, a cathode of the voltage stabilizing tube ZD71 is a voltage input end of the voltage limiting delay module, an anode of the voltage stabilizing tube ZD71 is connected to a first end of the resistor R71, a second end of the resistor R71 is connected to a first end of the resistor R72 and a base of the triode Q71, a collector of the triode Q71 is connected to a first end of the capacitor C70, a second end of the resistor R72, an emitter of the triode Q71, and a second end of the capacitor C70 are connected to the ground.

For the second conversion module 104, specifically, the second conversion module 104 includes a resistor R65, a diode D62, a power inductor L61, and a capacitor C62, a first end of the resistor R65 is connected to a cathode of the diode D62 and constitutes a first voltage input end of the second conversion module, a second end of the resistor R65 is connected to a first end of the capacitor C62 and constitutes a first voltage output end of the second conversion module 104, an anode of the diode D62 is connected to a first end of the power inductor L61, a second end of the power inductor L61 is connected to a second end of the capacitor C62 and constitutes a second voltage output end of the second conversion module 104.

After the input voltage is rectified and filtered by the input rectification module 101, a voltage drop is formed on the capacitor C2, and this voltage charges the capacitor C21 via the resistor R21, the resistor R22, and the resistor R23. When the voltage of the capacitor C21 rises to a turn-on voltage of a first control chip U10, a first-stage control circuit starts to work, an OUT pin of the first control chip U10 outputs a PWM type to modulate a first-stage conversion module, a control switch tube M1 performs a high-frequency switching operation, the first primary winding L1 of the transformer L20 obtains an induced voltage, the first secondary winding L2 outputs a PWM voltage, which is rectified by the diode D61 and filtered by the capacitor C63 to obtain a bus voltage Vbus, and the output of the second secondary winding L3 is rectified by the diode D22 and filtered by the capacitor C22 to obtain a direct current voltage to be supplied to the first control chip.

When the bus voltage Vbus has not risen to a value greater than a voltage stabilizing value of the voltage stabilizing tube ZD71, the voltage stabilizing tube ZD71 is in an off state. At this time, the dividing voltage passing through the resistor R71 and the resistor R72 makes the base voltage of the triode Q71 close to 0V, the triode Q71 is forward-biased on, shorting the soft start PWM pin to ground and preventing its voltage from rising, and the second-stage conversion module has no output.

When the bus voltage Vbus rises to a value greater than the voltage stabilizing value of the voltage stabilizing tube ZD71, the voltage stabilizing tube ZD71 is reversely broken down. At this time, the dividing voltage of the resistor R71 and the resistor R72 causes the base voltage of the triode Q71 to rise. When this voltage is greater than a voltage obtained by subtracting a triode E-B saturation voltage (about 0.7V in the case of a triode) from the voltage of the capacitor C70, the triode Q71 starts to be reverse-biased off, a second control chip IC starts to charge the capacitor C70 via the PWM pin (the soft start function pin). As the voltage of the capacitor C70 increases, the second-stage conversion module starts to work and the output voltage/current also increases. The second-stage conversion module starts to work and achieves a soft start when the output voltage Vbus of the first-stage conversion module reaches a high value. Therefore, after the second-stage conversion module outputs to bring a load, the decrease in the bus voltage Vbus does not become too low to cause the voltage of a VCC winding, i.e., the second secondary winding L3, to be too low, which will cause an intermittent working state of the first control chip IC U10. As a result, an overall smooth start is achieved.

In another corresponding case, when the input voltage of the input rectification module 101 is powered off, the first conversion module 103 quickly stops working and stops supplying energy to the second conversion module 104. Therefore, the bus voltage Vbus also rapidly decreases. As a result, the voltage stabilizing tube ZD71 is off, the triode Q71 is forward-biased on, and the charge stored on the capacitor C70 is rapidly discharged through the triode Q71, achieving a rapid reset of the soft start PWM pin so that a soft start function is provided in the next start process.

In the embodiment of the present invention, a delay control is performed on the start of a second-stage control module during the starting process, and a rapid start with high efficiency and low loss is achieved; meanwhile, a rapid reset is performed on the soft start of a second-stage control circuit when the input voltage is powered off, so that the soft start function is still provided when the input is being rapidly switched on and off. The present technical solution is achieved with a simple structure and a low overall cost.

The above content is a further detailed description of the present invention in combination with specific preferred embodiments, and specific embodiments of the present invention are not limited to the description. For those of ordinary skill in the art, equivalent substitutions or obvious variations made without departing from the inventive concept of the present invention and having the same performance or use shall be considered to be within the patent protection scope of the present invention as defined by the submitted claims.

## Claims

1. A two-stage switch power supply (10) wherein the two-stage switch power supply (10) comprises an input rectification module (101), a first control module (102), a first conversion module (103), a second control module (106), a second conversion module (104), and a voltage limiting switch module (105);
an output end of the input rectification module (101) is connected to a voltage input end of the first control module (102) and a voltage input end of the first conversion module (103), a signal output end of the first control module (102) is connected to a control end of the first conversion module (103), a voltage output end of the first conversion module (103) is connected to a voltage input end of the second conversion module (104), a first voltage input end of the voltage limiting switch module (105), and a voltage input end of the second control module (106), a second voltage input end of the voltage limiting switch module (105) is connected to a control end of the second control module (106), an output end of the second control module (106) is connected to a second voltage input end of the second conversion module (104);
the input rectification module (101) is configured to perform rectification and filtering on an input voltage and then to output a rectification filtering voltage signal to the first control module (102) and the first conversion module (103);
the first control module (102) is configured to start according to the rectification filtering voltage signal, and to control the first conversion module (103) to perform voltage conversion on the rectification filtering voltage signal so as to acquire a power supply voltage and a bus voltage;
the first conversion module (103) is configured to output the power supply voltage to the first control module (102) and to output the bus voltage to the second conversion module (104), the voltage limiting switch module (105), and the second control module (106);
the voltage limiting switch module (105) is configured to control, when the bus voltage reaches a preset voltage, the second control module (106) to output a voltage signal to the second conversion module (104) so as to control the second conversion module (104) to convert the bus voltage and then output the voltage to a load;
**characterized in that**
the second conversion module (104) includes a resistor R65, a diode D62, a power inductor L61 and a capacitor C62;
a first end of the resistor R65 is connected to a cathode of the diode D62 and constitutes a first voltage input end of the second conversion module (104);
a second end of the resistor R65 is connected to a first end of the capacitor C62 and constitutes a first voltage output end of the second conversion module (104);
an anode of the diode D62 is connected to a first end of the power inductor L61;
a second end of the power inductor L61 is connected to a second end of the capacitor C62 and constitutes a second voltage output end of the second conversion module (104);
the second control module (106) comprises a control chip IC (U61), that further includes a soft start PWM pin, a Vsense pin connected to the first voltage output end of the second conversion module (104), and a V switch pin connected to the second voltage output end of the second conversion module (104);
wherein the voltage limiting switch module (105) is configured to operate as a voltage limiting delay module comprising a triode Q71 and a capacitor C70, both connected in parallel across the soft start PWM pin and ground, and being configured to rapidly discharge the capacitor C70 through the triode Q71, thus achieving a rapid reset of the soft start PWM pin, so that a soft start function is provided in a next start process.

2. The two-stage switch power supply according to claim 1, wherein the voltage limiting switch module (105) is in an on state connected to the ground when the bus voltage has not reached the preset voltage, and the control end of the second control module (106) is connected to the ground;
the voltage limiting switch module (105) is disconnected from the ground when the bus voltage reaches the preset voltage, and the second control module (106) is configured to charge the voltage limiting switch module (105) through its control end so as to make the second control module (106) reach a working state.

3. The two-stage switch power supply (10) according to claim 2, wherein the voltage limiting switch module (105) includes a voltage limiting device (1501), a first voltage dividing device (1502), a second voltage dividing device (1503), a switch tube (1504), and an energy storage device (1505), wherein a first end of the voltage limiting device (1501) is the voltage input end of the voltage limiting switch module (105), a second end of the voltage limiting device (1501) is connected to a first end of the first voltage dividing device (1502), a second end of the first voltage dividing device (1502) is connected to a control end of the switch tube (1504) and a first end of the second voltage dividing device (1503), an input end of the switch tube (1504) is connected to the control end of the second control module (106) and a first end of the energy storage device (1505), an output end of the switch tube (1504), a second end of the second voltage dividing device (1503), and a second end of the energy storage device (1505) are connected to the ground together;
the voltage limiting device (1501) is in an off state when the bus voltage has not reached the preset voltage, and the switch tube (1504) is in an on state to connect the control end of the second control module (106) to the ground;
the voltage limiting device (1501) is in an on state when the bus voltage reaches the preset voltage, and the switch tube (1504) is in an off state so that the second control module (106) is configured to charge the energy storage device (1505) through its control end so as to make the second control module (106) reach a working state.

4. The two-stage switch power supply (10) according to claim 3, wherein when the first conversion module (103) stops working, the voltage limiting device (1501) is in an off state, and the switch tube (1504) is in an on state to discharge the energy storage device (1505) to the ground.

5. The two-stage switch power supply (10) according to claim 3, wherein the voltage limiting device (1501) is a voltage stabilizing tube, and a cathode and an anode of the voltage stabilizing tube are the first end and the second end of the voltage limiting device (1501).

6. The two-stage switch power supply (10) according to claim 3, wherein the switch tube (1504) is a PNP type triode, and a collector, an emitter, and a base of the PNP type triode are respectively the output end, the input end, and the control end of the switch tube (1504).

7. The two-stage switch power supply (10) according to claim 3, wherein the switch tube (1504) is a P type MOS transistor, and a drain, a source, and a gate of the P type MOS transistor are respectively the output end, the input end, and the control end of the switch tube (1504).

8. The two-stage switch power supply (10) according to claim 1, wherein the first control module (102) includes a power supply module (1201) and a first control chip (1202), a voltage input end of the power supply module (1201) is a voltage input end of the first control module (102), a voltage output end of the power supply module (1201) is connected to the voltage input end of the first control chip (1202), and a voltage output end of the first control chip (1202) is a voltage output end of the first control module (102);
the power supply module (1201) is configured to start the first control chip (1202) according to the rectification filtering voltage signal;
the first control chip (1202) is configured to control the first conversion module (103) to perform voltage conversion on the rectification filtering voltage signal;
the power supply module (1201) is configured to output a power supply voltage to the first control chip (1202).

9. The two-stage switch power supply (10) according to claim 8, wherein the first conversion module (103) includes a resistor R1, a resistor R2, a resistor R5, a resistor R11, a resistor R69, a capacitor C4, a capacitor C63, a diode D2, a diode D61, a field effect transistor M1, and a transformer;
a first end of the resistor R1 is connected to a first end of the resistor C4 and a different terminal of a primary winding L1 of the transformer and constitutes the voltage input end of the first conversion module (103), a second end of the resistor R1 is connected to a first end of the resistor R2, a second end of the resistor R2 is connected to a second end of the capacitor C4 and a cathode of the diode D2, an anode of the diode D2 is connected to a dotted terminal of the primary winding L1 of the transformer and a drain of the field effect transistor M1, a gate of the field effect transistor M1 is connected to a first end of the resistor R5, a second end of the resistor R5 is the control end of the first conversion module (103), a source of the field effect transistor M1 is connected to a first end of the resistor R11, a second end of the resistor R11 is connected to the ground, a dotted terminal of a first secondary winding L2 of the transformer is connected to an anode of the diode D61, a cathode of the diode D61 is connected to a first end of the capacitor C63 and a first end of the resistor R69, a different terminal of the first secondary winding L2 of the transformer, a second end of the capacitor C63, and a second end of the resistor R69 are connected to the ground together.

10. The two-stage switch power supply (10) according to claim 9, wherein the power supply module (1201) includes a resistor R21, a resistor R22, a resistor R23, a resistor R24, a resistor R25, a capacitor C21, a capacitor C22, a triode Q21, a voltage stabilizing tube ZD22 and a diode D22;
a first end of the resistor R21 is the voltage input end of the power supply module (1201), a second end of the resistor R21 is connected to a first end of the resistor R22, a second end of the resistor R22 is connected to a first end of the resistor R23, a second end of the resistor R23 is connected to an emitter of the triode Q21 and a first end of the capacitor C21 and constitutes the voltage output end of the power supply module (1201), a base of the triode Q21 is connected to a first end of the resistor R24 and a cathode of the voltage stabilizing tube ZD22, a second end of the resistor R24 is connected to a collector of the triode Q21, a first end of the capacitor C22, and a cathode of the diode D22, an anode of the diode D22 is connected to a first end of the resistor R25, a second end of the resistor R25 is connected to a dotted terminal of a second secondary winding L3 of the transformer, a different terminal of the second secondary winding L3 of the transformer, a second end of the capacitor C22, an anode of the voltage stabilizing tube ZD22, and a second end of the capacitor C21 are connected to the ground together.

## Patentansprüche

1. Zweistufiges Schaltnetzteil (10), wobei das zweistufige Schaltnetzteil (10) ein Eingangsgleichrichtungsmodul (101), ein erstes Steuermodul (102), ein erstes Wandlungsmodul (103), ein zweites Steuermodul (106), ein zweites Wandlungsmodul (104) und ein Spannungsbegrenzungsschaltermodul (105) umfasst;
ein Ausgangsende des Eingangsgleichrichtungsmoduls (101) mit einem Spannungseingangsende des ersten Steuermoduls (102) und einem Spannungseingangsende des ersten Wandlungsmoduls (103) verbunden ist, ein Signalausgangsende des ersten Steuermoduls (102) mit einem Steuerende des ersten Wandlungsmoduls (103) verbunden ist, ein Spannungsausgangsende des ersten Wandlungsmoduls (103) mit einem Spannungseingangsende des zweiten Wandlungsmoduls (104), einem ersten Spannungseingangsende des Spannungsbegrenzungsschaltermoduls (105) und einem Spannungseingangsende des zweiten Steuermoduls (106) verbunden ist, ein zweites Spannungseingangsende des Spannungsbegrenzungsschaltermoduls (105) mit einem Steuerende des zweiten Steuermoduls (106) verbunden ist, ein Ausgangsende des zweiten Steuermoduls (106) mit einem zweiten Spannungseingangsende des zweiten Wandlungsmoduls (104) verbunden ist;
das Eingangsgleichrichtungsmodul (101) konfiguriert ist, um eine Gleichrichtung und Filterung an einer Eingangsspannung durchzuführen und dann ein Gleichrichtungsfilterungsspannungssignal an das erste Steuermodul (102) und das erste Wandlungsmodul (103) auszugeben;
das erste Steuermodul (102) konfiguriert ist, um gemäß dem Gleichrichtungsfilterungsspannungssignal zu starten und das erste Wandlungsmodul (103) zu steuern, um eine Spannungswandlung an dem Gleichrichtungsfilterungsspannungssignal durchzuführen, um eine Stromversorgungsspannung und eine Busspannung zu erhalten;
das erste Wandlungsmodul (103) konfiguriert ist, um die Stromversorgungsspannung an das erste Steuermodul (102) auszugeben und um die Busspannung an das zweite Wandlungsmodul (104), das Spannungsbegrenzungsschaltermodul (105) und das zweite Steuermodul (106) auszugeben;
das Spannungsbegrenzungsschaltermodul (105) konfiguriert ist, um, wenn die Busspannung eine voreingestellte Spannung erreicht, das zweite Steuermodul (106) zu steuern, um ein Spannungssignal an das zweite Wandlungsmodul (104) auszugeben, um das zweite Wandlungsmodul (104) zu steuern, um die Busspannung zu wandeln und dann die Spannung an eine Last auszugeben;
**dadurch gekennzeichnet, dass**
das zweite Wandlungsmodul (104) einen Widerstand R65, eine Diode D62, eine Leistungsinduktivität L61 und einen Kondensator C62 einschließt;
ein erstes Ende des Widerstands R65 mit einer Kathode der Diode D62 verbunden ist und ein erstes Spannungseingangsende des zweiten Wandlungsmoduls (104) bildet;
ein zweites Ende des Widerstands R65 mit einem ersten Ende des Kondensators C62 verbunden ist und ein erstes Spannungsausgangsende des zweiten Wandlungsmoduls (104) bildet;
eine Anode der Diode D62 mit einem ersten Ende der Leistungsinduktivität L61 verbunden ist;
ein zweites Ende der Leistungsinduktivität L61 mit einem zweiten Ende des Kondensators C62 verbunden ist und ein zweites Spannungsausgangsende des zweiten Wandlungsmoduls (104) bildet;
das zweite Steuermodul (106) eine Steuerchip-IC (U61) umfasst, die ferner einen Softstart-PWM-Pin, einen Vsense-Pin, der mit dem ersten Spannungsausgangsende des zweiten Wandlungsmoduls (104) verbunden ist, und einen Vswitch-Pin, der mit dem zweiten Spannungsausgangsende des zweiten Wandlungsmoduls (104) verbunden ist, einschließt;
wobei das Spannungsbegrenzungsschaltermodul (105) konfiguriert ist, um als ein Spannungsbegrenzungsverzögerungsmodul zu arbeiten, das eine Triode Q71 und einen Kondensator C70 umfasst, die beide parallel über den Softstart-PWM-Pin und Masse geschaltet sind, und konfiguriert ist, um den Kondensator C70 schnell durch die Triode Q71 zu entladen, wodurch eine schnelle Rücksetzung des Softstart-PWM-Pins erreicht wird, sodass eine Softstart-Funktion in einem nächsten Startvorgang bereitgestellt wird.

2. Zweistufiges Schaltnetzteil nach Anspruch 1, wobei das Spannungsbegrenzungsschaltermodul (105) in einem Ein-Zustand mit Masse verbunden ist, wenn die Busspannung die voreingestellte Spannung nicht erreicht hat, und das Steuerende des zweiten Steuermoduls (106) mit Masse verbunden ist;
das Spannungsbegrenzungsschaltermodul (105) von Masse getrennt ist, wenn die Busspannung die voreingestellte Spannung erreicht, und das zweite Steuermodul (106) konfiguriert ist, um das Spannungsbegrenzungsschaltermodul (105) durch sein Steuerende zu laden, um zu bewirken, dass das zweite Steuermodul (106) einen Arbeitszustand erreicht.

3. Zweistufiges Schaltnetzteil (10) nach Anspruch 2, wobei das Spannungsbegrenzungsschaltermodul (105) eine Spannungsbegrenzungsvorrichtung (1501), eine erste Spannungsteilungsvorrichtung (1502), eine zweite Spannungsteilungsvorrichtung (1503), eine Schaltröhre (1504) und eine Energiespeichervorrichtung (1505) einschließt, wobei ein erstes Ende der Spannungsbegrenzungsvorrichtung (1501) das Spannungseingangsende des Spannungsbegrenzungsschaltermoduls (105) ist, ein zweites Ende der Spannungsbegrenzungsvorrichtung (1501) mit einem ersten Ende der ersten Spannungsteilungsvorrichtung (1502) verbunden ist, ein zweites Ende der ersten Spannungsteilungsvorrichtung (1502) mit einem Steuerende der Schaltröhre (1504) und einem ersten Ende der zweiten Spannungsteilungsvorrichtung (1503) verbunden ist, ein Eingangsende der Schaltröhre (1504) mit dem Steuerende des zweiten Steuermoduls (106) verbunden ist und ein erstes Ende der Energiespeichervorrichtung (1505), ein Ausgangsende der Schaltröhre (1504), ein zweites Ende der zweiten Spannungsteilungsvorrichtung (1503) und ein zweites Ende der Energiespeichervorrichtung (1505) zusammen mit Masse verbunden sind;
die Spannungsbegrenzungsvorrichtung (1501) sich in einem Aus-Zustand befindet, wenn die Busspannung die voreingestellte Spannung nicht erreicht hat, und die Schaltröhre (1504) sich in einem Ein-Zustand befindet, um das Steuerende des zweiten Steuermoduls (106) mit Masse zu verbinden;
die Spannungsbegrenzungsvorrichtung (1501) sich in einem Ein-Zustand befindet, wenn die Busspannung die voreingestellte Spannung erreicht, und die Schaltröhre (1504) sich in einem Aus-Zustand befindet, sodass das zweite Steuermodul (106) konfiguriert ist, um die Energiespeichervorrichtung (1505) durch sein Steuerende zu laden, um zu bewirken, dass das zweite Steuermodul (106) einen Arbeitszustand erreicht.

4. Zweistufiges Schaltnetzteil (10) nach Anspruch 3, wobei, wenn das erste Wandlungsmodul (103) das Arbeiten stoppt, sich die Spannungsbegrenzungsvorrichtung (1501) in einem Aus-Zustand befindet und sich die Schaltröhre (1504) in einem Ein-Zustand befindet, um die Energiespeichervorrichtung (1505) gegen Masse zu entladen.

5. Zweistufiges Schaltnetzteil (10) nach Anspruch 3, wobei die Spannungsbegrenzungsvorrichtung (1501) eine Spannungsstabilisierungsröhre ist und eine Kathode und eine Anode der Spannungsstabilisierungsröhre das erste Ende und das zweite Ende der Spannungsbegrenzungsvorrichtung (1501) sind.

6. Zweistufiges Schaltnetzteil (10) nach Anspruch 3, wobei die Schaltröhre (1504) eine PNP-leitende Triode ist, und ein Kollektor, ein Emitter und eine Basis der PNP-leitenden Triode das Ausgangsende, das Eingangsende bzw. das Steuerende der Schaltröhre (1504) sind.

7. Zweistufiges Schaltnetzteil (10) nach Anspruch 3, wobei die Schaltröhre (1504) ein P-leitender MOS-Transistor ist und ein Drain, eine Source und ein Gate des P-leitenden MOS-Transistors das Ausgangsende, das Eingangsende bzw. das Steuerende der Schaltröhre (1504) sind.

8. Zweistufiges Schaltnetzteil (10) nach Anspruch 1, wobei das erste Steuermodul (102) ein Stromversorgungsmodul (1201) und einen ersten Steuerchip (1202) einschließt, ein Spannungseingangsende des Stromversorgungsmoduls (1201) ein Spannungseingangsende des ersten Steuermoduls (102) ist, ein Spannungsausgangsende des Stromversorgungsmoduls (1201) mit dem Spannungseingangsende des ersten Steuerchips (1202) verbunden ist und ein Spannungsausgangsende des ersten Steuerchips (1202) ein Spannungsausgangsende des ersten Steuermoduls (102) ist;
das Stromversorgungsmodul (1201) konfiguriert ist, um den ersten Steuerchip (1202) gemäß dem Gleichrichtungsfilterungsspannungssignal zu starten;
der erste Steuerchip (1202) konfiguriert ist, um das erste Wandlungsmodul (103) zu steuern, um eine Spannungswandlung an dem Gleichrichtungsfilterungsspannungssignal durchzuführen;
das Stromversorgungsmodul (1201) konfiguriert ist, um eine Stromversorgungsspannung an den ersten Steuerchip (1202) auszugeben.

9. Zweistufiges Schaltnetzteil (10) nach Anspruch 8, wobei das erste Wandlungsmodul (103) einen Widerstand R1, einen Widerstand R2, einen Widerstand R5, einen Widerstand R11, einen Widerstand R69, einen Kondensator C4, einen Kondensator C63, eine Diode D2, eine Diode D61, einen Feldeffekttransistor M1 und einen Transformator einschließt;
ein erstes Ende des Widerstands R1 mit einem ersten Ende des Widerstands C4 und einem anderen Anschluss einer Primärwicklung L1 des Transformators verbunden ist und das Spannungseingangsende des ersten Wandlungsmoduls (103) bildet, ein zweites Ende des Widerstands R1 mit einem ersten Ende des Widerstands R2 verbunden ist, ein zweites Ende des Widerstands R2 mit einem zweiten Ende des Kondensators C4 und einer Kathode der Diode D2 verbunden ist, eine Anode der Diode D2 mit einem gepunkteten Anschluss der Primärwicklung L1 des Transformators und einem Drain des Feldeffekttransistors M1 verbunden ist, ein Gate des Feldeffekttransistors M1 mit einem ersten Ende des Widerstands R5 verbunden ist, ein zweites Ende des Widerstands R5 das Steuerende des ersten Wandlungsmoduls (103) ist, eine Source des Feldeffekttransistors M1 mit einem ersten Ende des Widerstands R11 verbunden ist, ein zweites Ende des Widerstands R11 mit Masse verbunden ist, ein gepunkteter Anschluss einer ersten Sekundärwicklung L2 des Transformators mit einer Anode der Diode D61 verbunden ist, eine Kathode der Diode D61 mit einem ersten Ende des Kondensators C63 verbunden ist und ein erstes Ende des Widerstands R69, ein anderer Anschluss der ersten Sekundärwicklung L2 des Transformators, ein zweites Ende des Kondensators C63 und ein zweites Ende des Widerstands R69 zusammen mit Masse verbunden sind.

10. Zweistufiges Schaltnetzteil (10) nach Anspruch 9, wobei das Stromversorgungsmodul (1201) einen Widerstand R21, einen Widerstand R22, einen Widerstand R23, einen Widerstand R24, einen Widerstand R25, einen Kondensator C21, einen Kondensator C22, eine Triode Q21, eine Spannungsstabilisierungsröhre ZD22 und eine Diode D22 einschließt;
ein erstes Ende des Widerstands R21 das Spannungseingangsende des Stromversorgungsmoduls (1201) ist, ein zweites Ende des Widerstands R21 mit einem ersten Ende des Widerstands R22 verbunden ist, ein zweites Ende des Widerstands R22 mit einem ersten Ende des Widerstands R23 verbunden ist, ein zweites Ende des Widerstands R23 mit einem Emitter der Triode Q21 und einem ersten Ende des Kondensators C21 verbunden ist und das Spannungsausgangsende des Stromversorgungsmoduls (1201) bildet, eine Basis der Triode Q21 mit einem ersten Ende des Widerstands R24 und einer Kathode der Spannungsstabilisierungsröhre ZD22 verbunden ist, ein zweites Ende des Widerstands R24 mit einem Kollektor der Triode Q21, einem ersten Ende des Kondensators C22 und einer Kathode der Diode D22 verbunden ist, eine Anode der Diode D22 mit einem ersten Ende des Widerstands R25 verbunden ist, ein zweites Ende des Widerstands R25 mit einem gepunkteten Anschluss einer zweiten Sekundärwicklung L3 des Transformators verbunden ist, ein anderer Anschluss der zweiten Sekundärwicklung L3 des Transformators, ein zweites Ende des Kondensators C22, eine Anode der Spannungsstabilisierungsröhre ZD22 und ein zweites Ende des Kondensators C21 zusammen mit Masse verbunden sind.

## Revendications

1. Alimentation électrique à commutateur à deux étages (10) dans laquelle l'alimentation électrique à commutateur à deux étages (10) comprend un module de redressement d'entrée (101), un premier module de commande (102), un premier module de conversion (103), un second module de commande (106), un second module de conversion (104), et un module de commutateur à limitation de tension (105) ;
une extrémité de sortie du module de redressement d'entrée (101) est connectée à une extrémité d'entrée de tension du premier module de commande (102) et à une extrémité d'entrée de tension du premier module de conversion (103), une extrémité de sortie de signal du premier module de commande (102) est connectée à une extrémité de commande du premier module de conversion (103), une extrémité de sortie de tension du premier module de conversion (103) est connectée à une extrémité d'entrée de tension du second module de conversion (104), à une première extrémité d'entrée de tension du module de commutateur à limitation de tension (105) et à une extrémité d'entrée de tension du second module de commande (106), une seconde extrémité d'entrée de tension du module de commutateur à limitation de tension (105) est connectée à une extrémité de commande du second module de commande (106), une extrémité de sortie du second module de commande (106) est connectée à une seconde extrémité d'entrée de tension du second module de conversion (104) ;
le module de redressement d'entrée (101) est configuré pour mettre en œuvre un redressement et un filtrage sur une tension d'entrée puis pour délivrer en sortie un signal de tension de filtrage de redressement au premier module de commande (102) et au premier module de conversion (103) ;
le premier module de commande (102) est configuré pour démarrer selon le signal de tension de filtrage de redressement et pour commander le premier module de conversion (103) pour mettre en œuvre une conversion de tension sur le signal de tension de filtrage de redressement de façon à acquérir une tension d'alimentation électrique et une tension de bus ;
le premier module de conversion (103) est configuré pour délivrer en sortie la tension d'alimentation électrique au premier module de commande (102) et pour délivrer en sortie la tension de bus au second module de conversion (104), au module de commutateur à limitation de tension (105) et au second module de commande (106) ;
le module de commutateur à limitation de tension (105) est configuré pour commander, lorsque la tension de bus atteint une tension prédéfinie, le second module de commande (106) pour délivrer en sortie un signal de tension au second module de conversion (104) de façon à commander le second module de conversion (104) pour convertir la tension de bus puis délivrer en sortie la tension à une charge ;
**caractérisée en ce que**
le second module de conversion (104) inclut une résistance R65, une diode D62, un inducteur de puissance L61 et un condensateur C62 ;
une première extrémité de la résistance R65 est connectée à une cathode de la diode D62 et constitue une première extrémité d'entrée de tension du second module de conversion (104) ;
une seconde extrémité de la résistance R65 est connectée à une première extrémité du condensateur C62 et constitue une première extrémité de sortie de tension du second module de conversion (104) ;
une anode de la diode D62 est connectée à une première extrémité de l'inducteur de puissance L61 ;
une seconde extrémité de l'inducteur de puissance L61 est connectée à une seconde extrémité du condensateur C62 et constitue une seconde extrémité de sortie de tension du second module de conversion (104) ;
le second module de commande (106) comprend un CI de puce de commande (U61), qui inclut en outre une broche PWM de démarrage progressif, une broche Vsense connectée à la première extrémité de sortie de tension du second module de conversion (104) et une broche Vswitch connectée à la seconde extrémité de sortie de tension du second module de conversion (104) ;
dans laquelle le module de commutateur à limitation de tension (105) est configuré pour fonctionner en tant que module de temporisation de limitation de tension comprenant une triode Q71 et un condensateur C70, l'un et l'autre connectés en parallèle par l'intermédiaire de la broche PWM de démarrage progressif et la masse et étant configurés pour décharger rapidement le condensateur C70 par l'intermédiaire de la triode Q71, ce qui réalise une réinitialisation rapide de la broche PWM de démarrage progressif, de sorte qu'une fonction de démarrage progressif soit fournie dans un processus de démarrage suivant.

2. Alimentation électrique à commutateur à deux étages selon la revendication 1, dans laquelle le module de commutateur à limitation de tension (105) est dans un état activé connecté à la masse lorsque la tension de bus n'a pas atteint la tension prédéfinie et l'extrémité de commande du second module de commande (106) est connectée à la masse ;
le module de commutateur à limitation de tension (105) est déconnecté de la masse lorsque la tension de bus atteint la tension prédéfinie et le second module de commande (106) est configuré pour charger le module de commutateur à limitation de tension (105) par l'intermédiaire de son extrémité de commande de façon à amener le second module de commande (106) à atteindre un état de travail.

3. Alimentation électrique à commutateur à deux étages (10) selon la revendication 2, dans laquelle le module de commutateur à limitation de tension (105) inclut un dispositif de limitation de tension (1501), un premier dispositif diviseur de tension (1502), un second dispositif diviseur de tension (1503), un tube commutateur (1504) et un dispositif de stockage d'énergie (1505), dans laquelle une première extrémité du dispositif de limitation de tension (1501) est l'extrémité d'entrée de tension du module de commutateur à limitation de tension (105), une seconde extrémité du dispositif de limitation de tension (1501) est connectée à une première extrémité du premier dispositif diviseur de tension (1502), une seconde extrémité du premier dispositif diviseur de tension (1502) est connectée à une extrémité de commande du tube commutateur (1504) et à une première extrémité du second dispositif diviseur de tension (1503), une extrémité d'entrée du tube commutateur (1504) est connectée à l'extrémité de commande du second module de commande (106) et à une première extrémité du dispositif de stockage d'énergie (1505), une extrémité de sortie du tube commutateur (1504), une seconde extrémité du second dispositif diviseur de tension (1503) et une seconde extrémité du dispositif de stockage d'énergie (1505) sont connectées à la masse ensemble ;
le dispositif de limitation de tension (1501) est dans un état désactivé lorsque la tension de bus n'a pas atteint la tension prédéfinie et le tube commutateur (1504) est dans un état activé pour connecter l'extrémité de commande du second module de commande (106) à la masse ;
le dispositif de limitation de tension (1501) est dans un état activé lorsque la tension de bus atteint la tension prédéfinie et le tube commutateur (1504) est dans un état désactivé de sorte que le second module de commande (106) soit configuré pour charger le dispositif de stockage d'énergie (1505) par l'intermédiaire de son extrémité de commande de façon à amener le second module de commande (106) à atteindre un état de travail.

4. Alimentation électrique à commutateur à deux étages (10) selon la revendication 3, dans laquelle lorsque le premier module de conversion (103) s'arrête de travailler, le dispositif de limitation de tension (1501) est dans un état désactivé et le tube commutateur (1504) est dans un état activé pour décharger le dispositif de stockage d'énergie (1505) vers la masse.

5. Alimentation électrique à commutateur à deux étages (10) selon la revendication 3, dans laquelle le dispositif de limitation de tension (1501) est un tube de stabilisation de tension et une cathode et une anode du tube de stabilisation de tension sont la première extrémité et la seconde extrémité du dispositif de limitation de tension (1501).

6. Alimentation électrique à commutateur à deux étages (10) selon la revendication 3, dans laquelle le tube commutateur (1504) est une triode de type PNP et un collecteur, un émetteur et une base de la triode de type PNP sont respectivement l'extrémité de sortie, l'extrémité d'entrée et l'extrémité de commande du tube commutateur (1504).

7. Alimentation électrique à commutateur à deux étages (10) selon la revendication 3, dans laquelle le tube commutateur (1504) est un transistor MOS de type P et un drain, une source et une grille du transistor MOS de type P sont respectivement l'extrémité de sortie, l'extrémité d'entrée et l'extrémité de commande du tube commutateur (1504).

8. Alimentation électrique à commutateur à deux étages (10) selon la revendication 1, dans laquelle le premier module de commande (102) inclut un module d'alimentation électrique (1201) et une première puce de commande (1202), une extrémité d'entrée de tension du module d'alimentation électrique (1201) est une extrémité d'entrée de tension du premier module de commande (102), une extrémité de sortie de tension du module d'alimentation électrique (1201) est connectée à l'extrémité d'entrée de tension de la première puce de commande (1202) et une extrémité de sortie de tension de la première puce de commande (1202) est une extrémité de sortie de tension du premier module de commande (102) ;
le module d'alimentation électrique (1201) est configuré pour démarrer la première puce de commande (1202) selon le signal de tension de filtrage de redressement ;
la première puce de commande (1202) est configurée pour commander le premier module de conversion (103) pour mettre en œuvre une conversion de tension sur le signal de tension de filtrage de redressement ;
le module d'alimentation électrique (1201) est configuré pour délivrer en sortie une tension d'alimentation électrique à la première puce de commande (1202).

9. Alimentation électrique à commutateur à deux étages (10) selon la revendication 8, dans laquelle le premier module de conversion (103) inclut une résistance R1, une résistance R2, une résistance R5, une résistance R11, une résistance R69, un condensateur C4, un condensateur C63, une diode D2, une diode D61, un transistor à effet de champ M1 et un transformateur ;
une première extrémité de la résistance R1 est connectée à une première extrémité de la résistance C4 et à une borne différente d'un enroulement primaire L1 du transformateur et constitue l'extrémité d'entrée de tension du premier module de conversion (103), une seconde extrémité de la résistance R1 est connectée à une première extrémité de la résistance R2, une seconde extrémité de la résistance R2 est connectée à une seconde extrémité du condensateur C4 et à une cathode de la diode D2, une anode de la diode D2 est connectée à une borne en pointillé de l'enroulement primaire L1 du transformateur et à un drain du transistor à effet de champ M1, une grille du transistor à effet de champ M1 est connectée à une première extrémité de la résistance R5, une seconde extrémité de la résistance R5 est l'extrémité de commande du premier module de conversion (103), une source du transistor à effet de champ M1 est connectée à une première extrémité de la résistance R11, une seconde extrémité de la résistance R11 est connectée à la masse, une borne en pointillé d'un premier enroulement secondaire L2 du transformateur est connectée à une anode de la diode D61, une cathode de la diode D61 est connectée à une première extrémité du condensateur C63 et à une première extrémité de la résistance R69, une borne différente du premier enroulement secondaire L2 du transformateur, une seconde extrémité du condensateur C63 et une seconde extrémité de la résistance R69 sont connectées à la masse ensemble.

10. Alimentation électrique à commutateur à deux étages (10) selon la revendication 9, dans laquelle le module d'alimentation électrique (1201) inclut une résistance R21, une résistance R22, une résistance R23, une résistance R24, une résistance R25, un condensateur C21, un condensateur C22, une triode Q21, un tube de stabilisation de tension ZD22 et une diode D22 ;
une première extrémité de la résistance R21 est l'extrémité d'entrée de tension du module d'alimentation électrique (1201), une seconde extrémité de la résistance R21 est connectée à une première extrémité de la résistance R22, une seconde extrémité de la résistance R22 est connectée à une première extrémité de la résistance R23, une seconde extrémité de la résistance R23 est connectée à un émetteur de la triode Q21 et à une première extrémité du condensateur C21 et constitue l'extrémité de sortie de tension du module d'alimentation électrique (1201), une base de la triode Q21 est connectée à une première extrémité de la résistance R24 et à une cathode du tube de stabilisation de tension ZD22, une seconde extrémité de la résistance R24 est connectée à un collecteur de la triode Q21, à une première extrémité du condensateur C22 et à une cathode de la diode D22, une anode de la diode D22 est connectée à une première extrémité de la résistance R25, une seconde extrémité de la résistance R25 est connectée à une borne en pointillé d'un second enroulement secondaire L3 du transformateur, une borne différente du second enroulement secondaire L3 du transformateur, une seconde extrémité du condensateur C22, une anode du tube de stabilisation de tension ZD22 et une seconde extrémité du condensateur C21 sont connectées à la masse ensemble.
